# EUROPÄISCHE PATENTSCHRIFT

(11) **EP 2 980 167 B1**
(45) Veröffentlichungstag und Bekanntmachung des Hinweises auf die Patenterteilung: **11.10.2017**
(21) Anmeldenummer: 14179516.1
(22) Anmeldetag: 01.08.2014
(51) Int. Cl.: C09D 5/00

(54) **Antifouling - Beschichtung und dessen Verwendung sowie Verfahren zum Schutz von Oberflächen vor Biofouling**
Antifouling coating and its use and method for protecting surfaces from biofouling
Revêtement antifouling et son utilisation, et procédé de protection de surface contre le biofouling.

(43) Veröffentlichungstag der Anmeldung: 03.02.2016
(73) Patentinhaber: Fraunhofer-Gesellschaft zur Förderung der angewandten Forschung e.V., 80686 München (DE); bioplan GmbH, 18211 Nienhagen (DE); Schiffswerft Barth GmbH, 18356 Barth (DE)
(72) Erfinder: Spohn, Uwe, 06120 Halle (DE); Rühl, Marco, 06749 Bitterfeld (DE); Ackermann, Stefan, 06114 Halle (DE); Füting, Manfred, 06120 Halle (DE); Scharf, Eva-Maria, 18059 Rostock (DE); Sandrock, Stefan, 18211 Nienhagen (DE); Kunsch, Sebastian, 18356 Barth (DE)
(74) Vertreter: Pfenning, Meinig & Partner mbB

(56) Entgegenhaltungen:
- WO-A1-2014/055418
- US-A1- 2007 093 570

## Beschreibung

Die Erfindung betrifft eine Antifouling-Beschichtung für Oberflächen von mit Flüssigkeiten in Kontakt kommenden Substraten basierend auf einem Lackschichtelektrodensystem mit mindestens zwei elektrisch leitfähigen Lackschichten, die in mindestens zwei elektrisch voneinander isolierte Bereiche segmentiert sind. Weiterhin betrifft die Erfindung ein Verfahren zum Schutz von Oberflächen von mit Flüssigkeiten in Kontakt kommenden Substraten vor Biofouling unter Einsatz der besagten Antifouling-Beschichtung. Verwendung finden die Antifouling-Beschichtungen für Schiffe, in der Wasseraufbereitung, für Wärmetauscher- und Kühlkreisläufe, in Membrantrennverfahren, hydrotechnischen Bauwerken und technische Elektrolysen, z.B. die Wasserelektrolyse.
Großflächig betriebene Elektrolyseprozesse spielen in der elektrochemischen Verfahrenstechnik eine wesentliche Rolle, da elektrochemische Umsetzungen vorrangig zweidimensional an der Elektrodenoberfläche ablaufen. Ein Ausweg wurde mit der Entwicklung bipolarer Elektrolysezellen mit alternierend in Serie geschalteten Anoden und Kathoden gefunden, um auch bei mittleren Stromdichten hohe Raum/Zeit-Ausbeuten zu erreichen, was jedoch relativ hohe Zellspannungen bedingt. Um elektrochemische Prozesse zur gesteuerten Funktionalisierung großer, auch sphärischer und anderer, nichtebener Oberflächen auf nicht oder schlecht leitenden Oberflächen, z.B. zur Einstellung von Redoxpotentialen, pH-Werten oder zur gleichmäßigen Abscheidung dünner Schichten anwenden zu können, bedarf es der großflächigen, vollständig und gleichmäßig benetzenden Abscheidung von Schichten mit ausreichend hoher elektrischer Leitfähigkeit, reproduzierbarer und präzis einstellbaren Schichtdicken. Die Betrachtung der elektrischen Feldverteilung und der elektrischen Ersatzschaltbilder führt zu dem Schluss, dass es für eine flächenhomogene Verteilung der Elektrolysestromdichte unter der elektrochemisch wirksamen Schicht einer Stromverteilungsschicht bedarf. Solche Elektroden sind aus dem Stand der Technik bekannt.

Während in EP 1 570 010 A1 Graphitfolien als Stromverteilungsschicht verwendet werden, wird in US 7,025,013 ein Harz mit suspendierten, elektrisch leitfähigen Fasern, einem Kohlefasergewebe, segmentierten Kohlenfasern, Kohlefaserpressmatten, elektrisch leitenden Netzen, Metallfolien, Metallnetzen, Metallblechen oder ein elektrisch leitendes Sieb eingesetzt.

In US 2010/0083893 wird ein Prozess beschrieben, in dem die Stromverteilungsschicht in die Herstellung von kunststoffbasierten Bootsrümpfen integriert ist, was jedoch technisch aufwendige Eingriffe in die Herstellung der faserverstärkten Bootsrümpfe erfordert.

In US 5,088,432 werden eine dünne Metallfolie oder Metallstreifen in die Stromverteilungsschicht eingebettet.

In EP 0 369 557 B1 wird als Stromverteilungsschicht eine Schicht aus dünnen Metalllamellen oder eine aus einer metalloxidischen, durch Spritzen aufgetragenen, aufgedampften oder aufgeschmolzenen Schicht angewendet. Man benötigt hier eine oder mehrere in das Meerwasser eintauchende Gegenelektroden aus Eisen, Kupfer oder Kohlenstoff.

In US 6 514 401 B2 wird eine vom Schiffsrumpf durch mehrere Schichten elektrisch isolierte, elektrisch leitfähige Schicht gegen eine oder mehrere äußere in das Meerwasser eintauchende Kathoden geschaltet, was jedoch zu sehr ungleichmäßigen Stromdichteverteilungen und damit zu einer ungleichmäßigen Antifoulingwirkung führt.

Der Nachteil aller bisher bekannten elektrochemischen Antifouling - Beschichtungen ist ein hoher technischer Montageaufwand, z.B. die technisch aufwendige Fixierung bzw. Montage, insbesondere der Stromverteilungsschicht, z.B. durch Klebetechniken. Weitere Nachteile sind die extrem eingeschränkten Möglichkeiten, solche Mehrschichtsysteme zu reparieren oder zu erneuern und die zu hohen Material- und Arbeitskosten. Bisher sind keine ausschließlich durch Streichen, Rollen, Sprayen oder Spritzen bei Umgebungstemperatur naßchemisch auftragbare Lackschichtelektroden bekannt, die eine Oberfläche größer 1500 cm² mit ausreichend gleichmäßiger Stromdichteverteilung bei der Wasserelektrolyse ermöglichen.

Da die äußere mit dem Wasser in Kontakt tretende Lackschicht eine deutlich geringere elektrische Leitfähigkeit als die Stromverteilungsschicht haben muss, enthält sie in der Regel viel weniger elektrisch leitfähige Partikel, auf die sich die makroskopische Stromdichteverteilung verteilt, was zu hohen destabilisierenden Mikrostromdichten und damit zu einer limitierten elektrochemischen Stabilität führt.

Die technische Anwendung des elektrochemischen Antifoulings oder der elektrochemischen Desinfektion an großen Flächen hat sich aus den genannten technischen und kostentechnischen Gründen bisher nicht durchgesetzt. Bisherige technische Lösungen sind nur bei unverhältnismäßig hohem, technischen Aufwand anwendbar, z.B. sind Graphitfolien, Metallnetze, Gewebe aus elektrisch leitfähigem Material nur mit zusätzlichem technischen Aufwand an sphärische Oberflächen anzupassen. Kohlenkompositmaterialien erreichen unter günstigsten Umständen nur eine spezifische Leitfähigkeit ≤ 10 Scm⁻¹, was für die Stromdichteverteilung über größere Flächen einer Elektrolyse sehr oft nicht ausreicht. Es ist praktisch ausgeschlossen, bei mit einer externen Gegenelektrode arbeitenden Elektrolysen, die in den wässrigen Elektrolyten eintaucht, eine gleichmäßige Stromdichteverteilung zu erreichen. In vielen Fällen ist dann auch die beabsichtigte Wirkung, z.B. die Einstellung eines Redoxzustandes, eines pH-Wertes oder einer abgeleiteten Antifoulingwirkung, insbesondere bei langen Prozesszeiten, inhomogen und flächenbezogen unvollständig. Beim Biofouling kann dies beginnend bei Flächensegmenten mit zu geringer Stromdichte zu einem störenden Biobewuchs führen, der sich dann schrittweise über die gesamte Fläche ausdehnt.

Für die Anwendung auf technische Elektrolysen an sehr großen und stark beanspruchten, ebenen und stark sphärischen Flächen, einschließlich kleiner Wölbungsradien wird ein nur durch Rollen, Streichen und Spritzen (Airless- und andere technische Sprühprozesse) auftragbares Schichtsystem notwendig, wobei die Auftragung nicht aufwendiger als bei konventionellen Anstrichen sein darf. So hergestellte Mehrschichtlacksysteme können nebeneinander an der zu modifizierenden Fläche angeordnet und alternierend als Anode und Kathode geschaltet werden. Dies ist die Voraussetzung für die flächenhomogene elektrochemische Erzeugung von hohen und niedrigen pH-Werten (pH-Stress), oberflächennah hohen Konzentrationen an Oxidations- und Reduktionsmitteln (Redoxstress) oder anderer bewuchshemmender Substanzen, wie z.B. bestimmter Metallionen (Ag(I), Cu(II), Cu(I)). Die homogene Flächenverteilung der Stromdichte und damit der elektrochemischen Wirkung erlaubt es auch, in großen, bewegten Elektrolytreservoiren potentiostatisch mit hoher Selektivität und bei minimaler Bildung toxischer Nebenprodukte mit konstantem Strom zu arbeiten. Auch die flächenhomogene Steuerung der elektrochemischen Antifoulingwirkung ist ohne den bisher notwendigen, jedoch inakzeptabel hohen technischen Aufwand bei der Installation bekannter Mehrschichtsysteme mit optimal eingestellten elektrischen Leitfähigkeiten nicht realisierbar.

Da die homogene Stromdichteverteilung schon bei relativ kleinen Flächen von 0,25 bis 2m² sehr hohe Verhältnisse der spezifischen Leitfähigkeiten der inneren leitfähigen Schicht zum Außenlack verlangt, ist die Zahl der im als Elektrodenoberfläche dienenden Außenlack elektrolytisch zugänglichen leitfähigen Teilchen relativ gering und sind die entsprechenden teilchenbezogenen Stromdichten sehr hoch, was die Standzeiten der Außenschichten drastisch verringert.

Für die Antifoulingwirkung wesentlich ist auch die flächenmäßig homogene Umschaltung der Elektrodenreaktionen, was die Effizienz der Antifoulingwirkung auf Grund erreichbar größerer pH- und Redoxpotentialgradienten signifikant erhöht. Nach dem derzeitigen Stand der Technik kann das großflächige elektrochemische Antifouling nur mit aufgeklebten Graphitfolien und anderweitig fixierten Metallgeweben und - flechtwerken und einem hohen Gehalt an Metalldrähten und -fasern erreicht werden, da mit anderen bisher angewandten Schichten keine ausreichend hohen spezifischen Leitfähigkeiten erreicht werden können. Dabei kann in vielen Fällen die auf die leitfähigen Partikel bezogene Mikrostromdichte so hoch sein, dass deren Stabilität die der jeweiligen Elektrolyseprozesse bestimmt und limitiert, was ein erheblicher technischer Nachteil ist.

Ausgehend hiervon war es Aufgabe der vorliegenden Verwendung eine in der Auftragung einfach zu handhabende Beschichtung bereitzustellen, die die beschriebenen Nachteile aus dem Stand der Technik beseitigt.

Diese Aufgabe wird durch die Antifouling -Beschichtung mit den Merkmalen des Anspruchs 1 und das Verfahren zum Schutz von Oberflächen mit den Merkmalen des Anspruchs 14 gelöst. Die weiteren abhängigen Ansprüche zeigen vorteilhafte Weiterbildungen auf. In Anspruch 16 werden erfindungsgemäße Verwendungen angegeben.

Erfindungsgemäß wird eine Antifouling-Beschichtung für Oberflächen von mit Flüssigkeiten in Kontakt kommenden Substraten bereitgestellt, die mindestens zwei Lackschichten enthält, die in mindestens zwei elektrisch voneinander isolierte Bereiche, die paarweise als Kathode und Anode gegeneinander elektrisch verschaltbar sind, segmentiert sind, wobei eine erste Lackschicht eine spezifische elektrische Leitfähigkeit von mindestens 10 Scm⁻¹ und eine zweite Lackschicht eine im Vergleich zur ersten Lackschicht um den Faktor 10 bis 1.000.000 geringere spezifische elektrische Leitfähigkeit aufweist. Die Antifouling-Beschichtung zeichnet sich dadurch aus, dass die Materialien der mindestens zwei elektrisch leitfähigen Lackschichten eine dynamische Viskosität im Bereich von 1 mPas bis 10⁷ mPas bei Temperaturen von maximal 50 °C aufweisen, wobei die Materialien der Lackschichten aus der Gruppe bestehend aus Polyurethanen, Polyharnstoff, Polysiloxanen, Sol-Gel-Lacken, Epoxidharzen, Phenolharzen, Kautschuk, Polyolefinen sowie deren Copolymeren, Blends, Legierungen, Mischungen und Verbundsysteme hiervon ausgewählt sind.

Das erfindungsgemäße Lackschichtelektrodensystem für großflächige Elektrolysen besteht aus paarweise gegeneinander geschalteten und durch Rollen, Streichen und Spritzen bei Temperaturen unter 50°C auftragbaren Lackschichten einstellbarer Schichtdicke und unterschiedlicher elektrischer Leitfähigkeit, wobei auf die zu funktionalisierende Oberfläche, sofern diese elektrisch leitend ist, eine isolierende Lackschicht aufgebracht ist, und auf die isolierende Schicht eine elektrisch leitfähige Lackschicht mit einer spezifischen Leitfähigkeit > 10 Scm⁻¹ abgeschieden ist, auf diese eine oder mehrere elektrisch leitfähige Schichten abgeschieden sind, wobei die äußere eine für Elektrolysen ausreichend hohe spezifische elektrische Leitfähigkeit hat und eine ausreichend hohe Wasser-, pH- und Redoxbeständigkeit aufweist. Eine zwischen diesen unterschiedlich leitfähigen Schichten abgeschiedene Schicht eines höheren elektrischen Widerstandes führt zu einer noch weiter verbesserten Stromdichteverteilung, was zu einer Absenkung der sonst unmittelbar notwendigen hohen Mikrostromverteilung auf der äußeren Schicht genutzt werden kann. Auf diese Weise können sowohl eine homogene Verteilung der Stromdichte und des elektrochemisch erzeugten chemischen Stresses erreicht als auch die elektrochemische Stabilität der in der Außenschicht dispergierten leitfähigen Partikel maximiert werden.

Erfindungsgemäß wird die jeweils elektrochemisch zu funktionalisierende Oberfläche, wenn diese selbst elektrisch leitfähig ist, durch Streichen, Rollen oder Sprühbeschichtung mit einer elektrisch isolierenden Schicht überzogen. Auf diese Schicht folgt eine mit den gleichen Methoden abgeschiedene hochleitfähige erste Lackschicht, die von 10 bis 60 Volumenprozent Metall- und Metalllegierungspartikel oder mit Silber, Kupfer und anderen Metallen beschichtete Kohlenstoffpartikel oder ein intrinsisch leitfähiges Polymer oder Polymergemisch mit einem adaptierten Volumengehalt enthält, wobei die leitfähigen Partikel ein ausreichend hohes Aspektverhältnis haben sollten. Mit den gleichen Methoden wird eine deutlich weniger leitfähige zweite elektrisch leitfähige Lackschicht abgeschieden, die eine um den Faktor 10 bis 1.000.000-fach geringere Leitfähigkeit als die hochleitfähige Schicht aufweist. Kontaktiert diese Schicht die Elektrolytlösung, werden als leitfähige Partikel vorzugsweise Graphit-, Glaskohlenstoffpartikel und korrosionsinhibierte Metallpartikel mit einem geringeren Volumenanteil dispergiert.

Zur Erreichung einer höheren elektrochemischen Stabilität wird mit den oben genannten, gleichen Methoden eine weitere elektrisch leitfähige Schicht, die elektrochemische Stromverteilungsschicht, mit einem höheren Anteil der für die zweite elektrisch leitfähige Schicht vorgesehenen Partikel oder anderer Partikel abgeschieden.

Die leitfähigen Partikel der Lackschichten werden in eine polymere Lackmatrix aus einem Polyurethan, einem Polyharnstoff, einem Polysiloxan, einem Epoxidharz, einem Phenolharz, Kautschuk, einem anderen Polyolefin oder aus einem Sol-Gel oder aus Kombinationen dieser Substanzen dispergiert, um durch Streichen, Rollen oder Sprühbeschichtung verarbeitbare Lackkomponenten herzustellen. Diese Lackkomponenten werden schichtbezogen in der jeweiligen Kombination und jeweils sequentiell durch diese Abscheidungsmethoden als Lackschichten abgeschieden.

Die hier beschriebenen Schichten bilden eine Mehrschichtlackelektrode, die vorzugsweise gegen eine gleichflächige und in der gleichen Weise aufgebaute Mehrschichtlackelektrode geschaltet wird. Jeweils zwei alternierend als Kathode bzw. Anode in einem Elektrolysestromkreis geschaltete Mehrschichtlackelektroden bilden ein Mehrschicht-Lack-Elektroden-System. Eine ausreichende Zahl solcher Mehrschicht-Lack-Elektroden-Systeme bedeckt eine definierte Anwendungsfläche. Als mögliche Anwendungsgebiete kommen die See- und Binnenschifffahrt von Sportbooten bis zu Hochseefrachtern, die Wasseraufbereitung von der Abwasser- bis zur Trinkwasserbehandlung, Wärmeaustauscher- und Kühlkreisläufe, Membrantrennverfahren von der Filtration über die Mikrofiltration bis zur Hyperfiltration(Umkehrosmose), hydrotechnische Bauwerke und technische Elektrolysen in Frage.

Eine bevorzugte Ausführungsform sieht vor, dass das Substrat aus einem elektrisch leitfähigen Material besteht und zwischen der ersten elektrisch leitfähigen Lackschicht und dem Substrat eine elektrisch isolierende Lackschicht aufgebracht ist.

Es ist weiter bevorzugt, dass auf der vom Substrat abgewandten Seite der zweiten elektrisch leitfähigen Lackschicht mindestens eine weitere Lackschicht mit einer gegenüber der zweiten elektrisch leitfähigen Lackschicht höheren spezifischen elektrischen Leitfähigkeit angeordnet ist.

Vorzugsweise ist die mit der Flüssigkeit in Kontakt kommende Lackschicht über mehr als 6 Monate elektrochemischen Dauerbetriebs wasserbeständig, pH-beständig und/oder redoxchemisch beständig.

Die elektrisch leitfähigen Lackschichten enthalten bevorzugt elektrisch leitfähige Partikel ausgewählt aus der Gruppe bestehend aus Metall- und Metalllegierungspartikel, Kohlenstoffpartikel, insbesondere aus Graphit, Graphen, Glaskohlenstoff, sowie Mischungen hiervon.

Es ist weiter bevorzugt, dass die erste elektrische leitfähige Lackschicht von 1 bis 70 Vol.-%, bevorzugt von 15 bis 60 Vol.-% und besonders bevorzugt von 30 bis 55 Vol.-% der elektrisch leitfähigen Partikel und/oder die zweite elektrisch leitfähige Schicht von 1 bis 40 Vol.-%, bevorzugt von 10 bis 30 Vol.-% und besonders bevorzugt von 20 bis 25 Vol.-% der elektrisch leitfähigen Partikel enthält.

Eine weitere bevorzugte Ausführungsform sieht vor, dass die Partikel aus Metall oder einer Metalllegierung zusätzlich eine korrosionsinhibierende Oberflächenbeschichtung aufweisen. Diese besteht vorzugsweise aus einem passivierendem Metallfilm oder einer oder mehreren auf der Oberfläche der leitfähigen Partikel so bindenden organischen Verbindungen, die bei nicht limitierendem schnellen Elektronendurchtritt den oxidativ-anodischen oder ferner den reduktiv-kathodischen Abbau der leitfähigen Partikel inhibieren.

Vorzugsweise weisen die Lackschichten eine Schichtdicke im Bereich von 10 bis 2.000 µm, bevorzugt von 100 bis 1.000 µm und besonders bevorzugt von 200 bis 500 µm auf.

Das Substrat besteht vorzugsweise aus einem Material, das ausgewählt ist aus der Gruppe bestehend aus Metall, Metalllegierungen, Holz, Kunststoff, Glas und Verbundsystemen hiervon. Dabei ist das Substrat bevorzugt ein Schiffsrumpf, eine Membran, ein Wärmetauscher, ein Bauteil aus einem Kühlkreislauf, ein Bauteil aus der Wasseraufbereitung, ein hydrotechnisches Bauwerk oder ein Bauteil aus der Elektrolyse.

Die segmentierten Bereiche weisen vorzugsweise eine Fläche von 0,1 bis 50 m², insbesondere von 1 bis 10m² auf.

Erfindungsgemäß wird ebenso ein Verfahren zum Schutz von Oberflächen von mit Flüssigkeit in Kontakt kommenden Substraten vor Biofouling bereitgestellt, bei dem die Oberfläche zumindest bereichsweise mit einer Antifouling-Beschichtung nach einem der vorhergehenden Ansprüche beschichtet wird und die elektrisch voneinander isolierte Bereiche intervallartig über einen definierten Zeitraum als Kathode oder Anode geschaltet werden.

Dabei ist es bevorzugt, dass der Zeitraum des Intervalls von 1 bis 10.000 s, insbesondere von 10 bis 500 s beträgt.

Die erfindungsgemäßen, oben beschriebenen Antifouling-Beschichtungen finden Verwendung für
- Schiffe in der See- und Binnenschifffahrt, insbesondere Sportbooten und Frachtschiffe,
- die Wasseraufbereitung, insbesondere in der Abwasser- und Trinkwasserbehandlung,
- Wärmetauscher- und Kühlkreisläufe,
- Membrantrennverfahren, insbesondere Ultrafiltration, Mikrofiltration, Hyperfiltration (Umkehrosmose),
- hydrotechnische Bauwerke und
- technische Elektrolysen.

Anhand der nachfolgenden Figuren und Beispiele soll der erfindungsgemäße Gegenstand näher erläutert werden, ohne diesen auf die hier gezeigten spezifischen Ausführungsformen einschränken zu wollen.

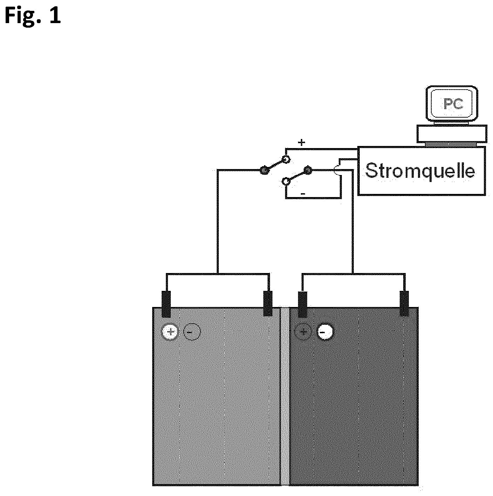

Fig. 1 zeigt anhand einer schematischen Darstellung die Beschaltung einer erfindungsgemäßen Antifouling-Beschichtung.
   Hierin bedeuten:
   PC - Personalcomputer,
   (-) Anode und
   (+)- Kathode.
Fig. 2 a und 2b zeigen anhand einer schematischen Darstellung den Aufbau zweier erfindungsgemäße Antifouling-Beschichtungen.
   Hierin bedeuten:
   1 elektrisch isolierende Schicht (angewendet, wenn Substrat elektrisch leitend)
   2 erste (elektrisch leitfähige) Lackschicht
   3 zweite (elektrisch leitfähige) Lackschicht
   4 dritte (elektrisch leitfähige) Lackschicht
   5 Flüssigkeit, vorzugsweise wässrige Lösung
   6 Substrat (vor Biofouling zu schützend.)

### Beispiel 1

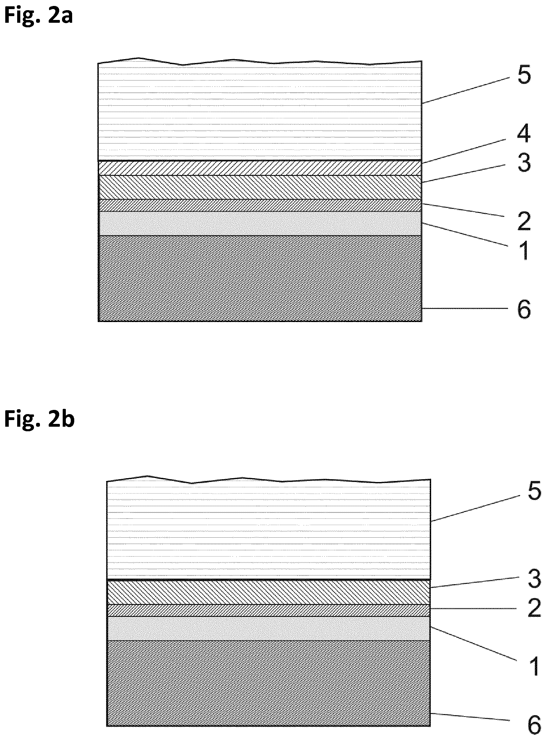

- Auf zwei großflächigen und als Elektrode schaltbaren Blechen aus Schiffsstahl werden 3 bis 9 Lagen eines 2-Komponenten-Epoxid-Harzes mit einer elektrisch isolierenden Gesamtschichtdicke von 100 bis 350 µm aufgetragen (1 gemäß Fig. 2a bzw. Fig. 2b).
- Erste elektrisch leitfähige Schicht 2 gemäß Fig. 2a bzw. 2b: Nach Trocknung der Grundierung werden zwischen 5 und 10 Lagen eines mit versilberten Kupferflakes und 2 Massen% Leitruß beladenen 1-Komponenten Acrylatlackes aufgetragen, wobei eine Schichtdicke von 50 bis 150 µm resultiert.
- Elektrisch leitfähige Schicht 3 gemäß Fig. 2a bzw. Fig. 2b: Nach Trocknung der Schicht 2 werden 4 bis 6 Lagen eines mit 30 bis 40 Massenprozent Graphitflakes beladenen aromatischen Polyurethanlackes, hergestellt aus 2 Volumenteilen eines acryliertem Polyols, 3 Volumenteilen eines aromatischen Polyisocyanatprepolymers und zwei bis drei Teilen getrockneten Poly-n-butylacetats aufgetragen, wobei eine Schichtdicke von 100 bis 500 µm resultiert.

### Beispiel 2

- Auf zwei großflächigen und als Elektrode schaltbaren Blechen aus Schiffsstahl (6) werden 3 bis 9 Lagen eines 2-Komponenten-Epoxid-Harzes mit einer Gesamtschichtdicke von 100 bis 350 µm aufgetragen (elektrisch isolierende Schicht 1 gemäß Fig. 2a bzw. Fig. 2b).
- Erste elektrisch leitfähige Schicht 2 gemäß Fig. 2a bzw. Fig. 2b: Nach Trocknung der Grundierung werden zwischen 5 und 10 Lagen eines mit versilberten Kupferflakes und 2 Massen% Leitruß beladenen 1-Komponenten Acrylatlackes aufgetragen, wobei eine Schichtdicke von 50 bis 150 µm resultiert.
- Zweite elektrisch leitfähige Schicht 3 gemäß Fig. 2a bzw. Fig. 2b: Nach Trocknung der Schicht 2 werden 5 bis 9 Lagen eines mit 15 bis 25 Massenprozent Graphitflakes beladenen Sol-Gel-Lackes aufgetragen, wobei eine Schichtdicke von 100 bis 500 µm resultiert.
- Dritte elektrisch leitfähige Schicht 4 gemäß Figur 2b: nach Trocknung der Schicht 3 werden 2 bis 4 Lagen eines mit mehr als 30 Massenprozent Graphitflakes beladenen Sol-Gel-Lackes aufgetragen, wobei eine Schichtdicke von < 200 µm resultiert.

## Patentansprüche

1. Antifouling-Beschichtung für Oberflächen von mit Flüssigkeiten in Kontakt kommenden Substraten enthaltend
mindestens zwei elektrisch leitfähige Lackschichten, die in mindestens zwei voneinander elektrisch isolierte Bereiche, die paarweise als Kathode und Anode gegeneinander elektrisch verschaltbar sind, segmentiert sind,
wobei eine erste elektrisch leitfähige Lackschicht eine spezifische elektrische Leitfähigkeit von mindestens 10 Scm⁻¹ und eine zweite Lackschicht eine im Vergleich zur ersten Lackschicht um den Faktor 10 bis 1.000.000 geringere spezifische elektrische Leitfähigkeit aufweist, **dadurch gekennzeichnet, dass** die Materialien der mindestens zwei elektrisch leitfähigen Lackschichten eine dynamische Viskosität im Bereich von 1 mPas bis 10⁷ mPas bei Temperaturen von maximal 50 °C aufweisen, wobei die Materialien der Lackschichten ausgewählt sind aus der Gruppe bestehend aus Polyurethanen, Polyharnstoff, Polysiloxanen, Sol-Gel-Lacken, Epoxidharzen, Phenolharzen, Kautschuk, Polyolefinen sowie deren Copolymeren, Blends, Legierungen, Mischungen und Verbundsysteme hiervon.

2. Beschichtung nach dem vorhergehenden Anspruch,
**dadurch gekennzeichnet, dass** das Substrat aus einem elektrisch leitfähigen Material besteht und zwischen der ersten elektrisch leitfähigen Lackschicht und dem Substrat eine elektrisch isolierende Lackschicht aufgebracht ist.

3. Beschichtung nach einem der vorhergehenden Ansprüche,
**dadurch gekennzeichnet, dass** auf der vom Substrat abgewandten Seite der zweiten elektrisch leitfähigen Lackschicht mindestens eine weitere Lackschicht mit einer gegenüber der zweiten Lackschicht höheren spezifischen elektrischen Leitfähigkeit angeordnet ist.

4. Beschichtung nach einem der vorhergehenden Ansprüche, **dadurch gekennzeichnet, dass** die mit der Flüssigkeit in Kontakt kommende Lackschicht über mehr als 6 Monate elektrochemischen Dauerbetriebs wasserbeständig, pH-beständig und/oder redoxbeständig ist.

5. Beschichtung nach einem der vorhergehenden Ansprüche, **dadurch gekennzeichnet, dass** die elektrisch leitfähigen Lackschichten elektrisch leitfähige Partikel ausgewählt aus der Gruppe bestehend aus Metall- und Metalllegierungspartikel, Kohlenstoffpartikel, insbesondere aus Graphit, Graphen, Glaskohlenstoff, sowie Mischungen hiervon enthalten.

6. Beschichtung nach dem vorhergehenden Anspruch, **dadurch gekennzeichnet, dass** die erste elektrisch leitfähige Lackschicht von 1 bis 70 Vol.-%, bevorzugt von 15 bis 60 Vol.-% und besonders bevorzugt von 30 bis 55 Vol.-% an elektrisch leitfähigen Partikeln und/oder die zweite elektrisch leitfähige Schicht von 1 bis 40 Vol.-%, bevorzugt von 10 bis 30 Vol.-% und besonders bevorzugt von 20 bis 25 Vol.-% an elektrisch leitfähigen Partikeln enthält.

7. Beschichtung nach dem vorhergehenden Anspruch, **dadurch gekennzeichnet, dass** die Partikel aus Metall oder Metalllegierungen eine korrosionsinhibierende Oberflächenbeschichtung aufweisen.

8. Beschichtung nach einem der vorhergehenden Ansprüche,
**dadurch gekennzeichnet, dass** die Lackschichten eine Schichtdicke im Bereich von 10 bis 2000 µm, bevorzugt von 100 bis 1000 µm und besonders bevorzugt von 200 bis 500 µm aufweisen.

9. Beschichtung nach einem der vorhergehenden Ansprüche,
**dadurch gekennzeichnet, dass** das Substrat aus einem Material besteht, das ausgewählt ist aus der Gruppe bestehend aus Metall, Metalllegierungen, Holz, Kunststoff, Glas und Verbundsystemen hiervon.

10. Beschichtung nach einem der vorhergehenden Ansprüche,
**dadurch gekennzeichnet, dass** das Substrat ein Schiffsrumpf, eine Membran, ein Wärmetauscher, ein Bauteil aus einem Kühlkreislauf, ein Bauteil aus der Wasseraufbereitung, ein hydrotechnisches Bauwerk oder ein Bauteil aus der Elektrolyse ist.

11. Beschichtung nach einem der vorhergehenden Ansprüche,
**dadurch gekennzeichnet, dass** die segmentierten Bereiche eine Fläche von 0,1 bis 50m², insbesondere von 1 bis 10m² aufweisen.

12. Verfahren zum Schutz von Oberflächen von mit Flüssigkeiten in Kontakt kommenden Substraten vor Biofouling, bei dem die Oberfläche zumindest bereichsweise mit einer Antifouling-Beschichtung nach einem der vorhergehenden Ansprüche beschichtet wird und die elektrisch voneinander isolierte Bereiche intervallartig über einen definierten Zeitraum als Kathode oder Anode geschaltet werden.

13. Verfahren nach Anspruch 12,
**dadurch gekennzeichnet, dass** der Zeitraum des Intervalls von 1 bis 10000 s, insbesondere von 10 bis 500 s beträgt.

14. Verwendung der Antifouling-Beschichtung gemäß einem der Ansprüche 1 bis 11 für
• Schiffe in der See- und Binnenschifffahrt, insbesondere Sportbooten und Frachtschiffe,
• die Wasseraufbereitung, insbesondere in der Abwasser- und Trinkwasserbehandlung,
• Wärmetauscher- und Kühlkreisläufe,
• Membrantrennverfahren, insbesondere Ultrafiltration, Mikrofiltration, Hyperfiltration (Umkehrosmose),
• hydrotechnische Bauwerke und
• technische Elektrolysen.

## Claims

1. Antifouling coating for surfaces of substrates which come into contact with liquids, comprising
at least two electrically conductive lacquer layers which are segmented into at least two regions which are electrically insulated from one another and can be connected electrically reciprocally in pairs as the cathode and anode,
wherein a first electrically conductive lacquer layer has a specific electrical conductivity of at least 10 Scm⁻¹ and a second lacquer layer has a specific electrical conductivity which is lower by a factor of 10 to 1,000,000 compared with the first lacquer layer, **characterised in that** the materials of the at least two electrically conductive lacquer layers have a dynamic viscosity in the range of from 1 mPas to 10⁷ mPas at temperatures of 50 °C maximum, wherein the materials of the lacquer layers are selected from the group consisting of polyurethanes, polyurea, polysiloxanes, sol-gel lacquers, epoxy resins, phenolic resins, rubber, polyolefins and copolymers, blends, alloys, mixtures and composite systems thereof.

2. Coating according to the preceding claim,
**characterised in that** the substrate consists of an electrically conductive material and an electrically insulating lacquer layer is applied between the first electrically conductive lacquer and the substrate.

3. Coating according to one of the preceding claims,
**characterised in that** at least one further lacquer layer having a higher specific electrically conductivity than the second lacquer layer is arranged on the side of the second electrically conductive lacquer layer facing away from the substrate.

4. Coating according to one of the preceding claims, **characterised in that** the lacquer layer which comes into contact with the liquid is water-resistant, pH-resistant and/or redox-resistant over more than 6 months of continuous electrochemical operation.

5. Coating according to one of the preceding claims, **characterised in that** the electrically conductive lacquer layers contain electrically conductive particles selected from the group consisting of metal and metal alloy particles, carbon particles, in particular of graphite, graphene, glassy carbon, and mixtures thereof.

6. Coating according to the preceding claim, **characterised in that** the first electrically conductive lacquer layer contains from 1 to 70 vol.%, preferably from 15 to 60 vol.% and particularly preferably from 30 to 55 vol.% of electrically conductive particles and/or the second electrically conductive layer contains from 1 to 40 vol.%, preferably from 10 to 30 vol.% and particularly preferably from 20 to 25 vol.% of electrically conductive particles.

7. Coating according to the preceding claim, **characterised in that** the particles of metal or metal alloys have a corrosion-inhibiting surface coating.

8. Coating according to one of the preceding claims,
**characterised in that** the lacquer layers have a layer thickness in the range of from 10 to 2,000 µm, preferably from 100 to 1,000 µm and particularly preferably from 200 to 500 µm.

9. Coating according to one of the preceding claims,
**characterised in that** the substrate consists of a material which is selected from the group consisting of metal, metal alloys, wood, plastic, glass and composite systems thereof.

10. Coating according to one of the preceding claims,
**characterised in that** the substrate is a ship's hull, a membrane, a heat exchanger, a component from a cooling circulation, a component from water treatment, a hydrotechnical construction or a component from electrolysis.

11. Coating according to one of the preceding claims,
**characterised in that** the segmented regions have an area of from 0.1 to 50 m², in particular from 1 to 10 m².

12. Method for protecting surfaces of substrates which come into contact with liquids from biofouling, in which the surface is coated at least in regions with an antifouling coating according to one of the preceding claims and the regions which are electrically insulated from one another are connected as the cathode or anode at intervals over a defined period of time.

13. Method according to claim 12,
**characterised in that** the period of the interval is from 1 to 10,000 s, in particular from 10 to 500 s.

14. Use of the antifouling coating according to one of claims 1 to 11 for
• ships in maritime and inland navigation, in particular recreational craft and cargo vessels,
• water treatment, in particular in waste water and drinking water treatment,
• heat exchangers and cooling circulations
• membrane separation processes, in particular ultrafiltration, microfiltration, hyperfiltration (reverse osmosis),
• hydrotechnical constructions and
• industrial electrolyses.

## Revendications

1. Revêtement antisalissure pour des surfaces de substrats entrant en contact avec des liquides, contenant
au moins deux couches de vernis conductrices de l'électricité, qui sont segmentées dans au moins deux zones électriquement isolées l'une de l'autre, qui par paires peuvent être électriquement câblées l'une par rapport à l'autre en tant que cathode et anode,
dans lequel une première couche de vernis conductrice de l'électricité présente une conductivité électrique spécifique d'au moins 10 S.cm⁻¹ et une deuxième couche de vernis présente une conductivité électrique spécifique 10 à 1 000 000 de fois plus faible que la première couche de vernis, **caractérisé en ce que** les matériaux des au moins deux couches de vernis conductrices de l'électricité présentent une viscosité dynamique comprise dans la plage de 1 mPa.s à 10⁷ mPa.s à des températures maximales de 50°C, les matériaux des couches de vernis étant choisis dans le groupe consistant en les polyuréthannes, les polyurées, les polysiloxanes, les vernis sol-gel, les résines époxydes, les résines phénoliques, le caoutchouc, les polyoléfines, ainsi que les copolymères, les mélanges homogènes, les alliages, les mélanges et les systèmes composites de ceux-ci.

2. Revêtement selon la revendication précédente, **caractérisé en ce que** le substrat est constitué d'un matériau conducteur de l'électricité, et une couche de vernis électriquement isolante est appliquée entre la première couche de vernis conductrice de l'électricité et le substrat.

3. Revêtement selon l'une des revendications précédentes, **caractérisé en ce qu'**au moins une couche de vernis supplémentaire, ayant une conductivité électrique spécifique plus élevée que celle de la deuxième couche de vernis, est disposée sur la face opposée au substrat de la deuxième couche de vernis conductrice de l'électricité.

4. Revêtement selon l'une des revendications précédentes, **caractérisé en ce que** la couche de vernis entrant en contact avec le liquide présente une résistance à l'eau, une résistance au pH et/ou une résistance à des conditions rédox pour une utilisation électrochimique permanente supérieure à 6 mois.

5. Revêtement selon l'une des revendications précédentes, **caractérisé en ce que** les couches de vernis conductrices de l'électricité contiennent des particules conductrices de l'électricité, choisies dans le groupe consistant en les particules métalliques et d'alliages métalliques, les particules de carbone, en particulier en graphite, en graphène, en carbone vitreux, ainsi que les mélanges de ceux-ci.

6. Revêtement selon la revendication précédente, **caractérisé en ce que** la première couche de vernis conductrice de l'électricité contient de 1 à 70 % en volume, de préférence de 15 à 60 % en volume et d'une manière particulièrement préférée de 30 à 55 % en volume de particules conductrices de l'électricité, et/ou la deuxième couche conductrice de l'électricité contient de 1 à 40 % en volume, de préférence de 10 à 30 % en volume et d'une manière particulièrement préférée de 20 à 25 % en volume de particules conductrices de l'électricité.

7. Revêtement selon la revendication précédente, **caractérisé en ce que** les particules d'un métalliques ou d'alliages métalliques présentent un revêtement superficiel inhibiteur de corrosion.

8. Revêtement selon l'une des revendications précédentes, **caractérisé en ce que** les couches de vernis présentent une épaisseur de couche comprise dans la plage de 10 à 2000 µm, de préférence de 100 à 1000 µm et d'une manière particulièrement préférée de 200 à 500 µm.

9. Revêtement selon l'une des revendications précédentes, **caractérisé en ce que** le substrat est constitué d'un matériau qui est choisi dans le groupe consistant en un métal, des alliages métalliques, du bois, un plastique, du verre et des systèmes composites de ceux-ci.

10. Revêtement selon l'une des revendications précédentes, **caractérisé en ce que** le substrat est une coque de navire, une membrane, un échangeur de chaleur, un composant d'un circuit de refroidissement, un composant d'une unité de traitement de l'eau, un ouvrage hydraulique ou un composant d'une unité d'électrolyse.

11. Revêtement selon l'une des revendications précédentes, **caractérisé en ce que** les zones segmentées présentent une aire de 0,1 à 50 m², en particulier de 1 à 10 m².

12. Procédé pour la protection, vis-à-vis d'un encrassement biologique, de surfaces de substrats entrant en contact avec des liquides, dans lequel la surface est au moins par zones revêtue d'un revêtement antisalissure selon l'une des revendications précédentes, et les zones électriquement isolées l'une de l'autre sont, par intervalles, câblées sur un laps de temps défini en tant que cathode ou anode.

13. Procédé selon la revendication 12, **caractérisé en ce que** la durée de l'intervalle est de 1 à 10 000 s, en particulier de 10 à 500 s.

14. Utilisation du revêtement antisalissure selon l'une des revendications 1 à 11, pour
- des navires en navigation maritime et navigation intérieure, en particulier les bateaux de plaisance et les cargos,
- le traitement de l'eau, en particulier pour le traitement des eaux usées et de l'eau potable,
- les circuits d'échange de chaleur et de refroidissement,
- les procédés de séparation sur membrane, en particulier l'ultrafiltration, la microfiltration, l'hyperfiltration (osmose inverse),
- les ouvrages hydrauliques, et
- les électrolyses techniques.
